# EUROPÄISCHE PATENTSCHRIFT

(11) **EP 2 030 061 B1**
(45) Veröffentlichungstag und Bekanntmachung des Hinweises auf die Patenterteilung: **25.05.2016**
(21) Anmeldenummer: 07722469.9
(22) Anmeldetag: 25.05.2007
(51) Int. Cl.: G02B 21/26

(54) **GERÄTESTATIV ZUR TECHNISCHEN INSPEKTION ODER FERTIGUNG**
DEVICE STAND FOR TECHNICAL INSPECTION OR ASSEMBLY
SUPPORT D'APPAREIL UTILISÉ À DES FINS D'ASSEMBLAGE OU D'INSPECTION TECHNIQUE

(30) Priorität: 30.05.2006 DE 202006008660 U
(43) Veröffentlichungstag der Anmeldung: 04.03.2009
(73) Patentinhaber: Technolab Gmbh, 13507 Berlin (DE)
(72) Erfinder: NUSCHE, Olaf, 14621 Schönwalde (DE)
(74) Vertreter: Bittner, Thomas L.
(86) Internationale Anmeldenummer: PCT/DE2007/000951
(87) Internationale Veröffentlichungsnummer: WO 2007/137563

(56) Entgegenhaltungen:
- DE-A1- 3 624 674
- DE-B- 1 104 711
- DE-U- 1 706 671
- JP-A- 2002 090 282
- US-A- 451 181
- US-A- 2 960 913
- US-A- 3 484 150
- US-A- 4 723 544
- US-A- 5 193 312
- US-A1- 2005 237 604

## Beschreibung

Die Erfindung bezieht sich auf ein Gerätestativ zur technischen Inspektion oder Fertigung.

### Hintergrund der Erfindung

Ein Gerätestativ mit Objektträgertisch für die technische Inspektion ist aus dem Fachhandel bekannt. An einem starr mit einem Objektträgertisch verbundenen Stativ ist an dessen übertragendem Kopf eine elektronische Kamera horizontal um etwa 200° verschwenkbar angelenkt. Die Kamera ist mit fixierter Neigung zum Schwenkarm auf den Objektträgertisch ausgerichtet.

Nachteilig an dieser Auslegung ist, dass die Kamera das Objekt, beispielsweise eine bestückte oder unbestückte Leiterplatte, beim Verschwenken in einem Kreisbogen überstreicht, nicht aber einzelne Teile auf der Platine von allen Seiten erfassen kann.

Das Dokument US 2005/0237604 A1 beschreibt eine Vorrichtung zur in-vivo Untersuchung. Die Vorrichtung umfasst einen Objektträger, einen Messkopf, welcher ein Objekt auf dem Objektträger untersucht und einen Rotationsmechanismus, mittels welchem der Messkopf um den Objektträger rotiert.

Das Dokument DE 36 24 674 A1 beschreibt eine Vorrichtung zur optischen Vermessung und Aufnahme von Hautobjekten für diagnostische Zwecke.

Das Dokument DE 17 06 671 U betrifft einen magnetischen Gleittisch für ein Mikroskop.

### Zusammenfassung der Erfindung

Ausgehend vom Stand der Technik liegt der Erfindung die Aufgabe zugrunde, ein verbessertes Gerätestativ zum Tragen eines Gerätes für eine technische Inspektion oder Fertigung anzugeben, mit dem Einzelteile, beispielsweise einzelne elektronische Bauteile auf einer Leiterplatine, rundum optisch einsehbar oder bearbeitbar sind.

Die Erfindung wird mit einem Gerätestativ zur technischen Inspektion oder Fertigung nach dem unabhängigen Anspruch 1 gelöst. Vorteilhafte Ausgestaltungen der Erfindung sind Gegenstand von abhängigen Unteransprüchen.

Mit der Erfindung ist ein Gerätestativ geschaffen, welches dem Benutzer die Möglichkeit gibt, das an den Geräteanschluss gekoppelte Gerät in einem im wesentlichen gleichbleibenden Abstand entlang eines Kreisbogenabschnittes um ein Objekt auf dem Objektträger zu bewegen. Indem der sich zwischen der Wirkachse der Gerätes und der Rotationsachse sich ergebende Schnittpunkt bei der geführten Verlagerung des Gerätes im Wesentlichen aufrechterhalten wird, erfolgt die Verlagerung des Gerätes bzw. des Geräteanschlusses auf dem Kreisbogenabschnitt in im wesentlichen unveränderten Abstand zu dem Objekt auf dem Objektträger. Wenn als Gerät eine Kamera genutzt wird, bedeutet dies, dass das Objekt stets im wesentlichen im Fokusbereich der Kamera verbleibt, wenn der Fokus in einer Ausgangsstellung eingestellt wurde. Die Wirkachse entspricht bei der Nutzung einer Kamera, beispielsweise einer Videokamera, im wesentlichen der optischen Achse.

Die Erfindung sieht vor, dass der Objektträger mittels einer Magnetkopplung an den Objektträgertisch gehalten wird. Die Magnetkopplung ist eine mit wenig Aufwand kostengünstig ausführbare Kopplungsart und ermöglicht einerseits die notwendige Fixierung des Objektträgers in einer gewünschten Stellung und andererseits das Verlagern zwischen verschiedenen Stellungen des Objektträgers relativ zum Objektträgertisch. Auf zusätzliche Feststellmittel zum Fixieren des Objektträgers in einer gewünschten Stellung relativ zum Objektträgertisch kann in der Regel verzichtet werden.

Eine bevorzugte Weiterbildung der Erfindung sieht vor, dass der Objektträger die Rotationsachse nicht ändernd verlagerbar ist. Hierdurch ist es ermöglicht, das Objekt auf dem Objektträger in den Bereich der Rotationsachse zu verlagern oder aus diesem Bereich heraus, ohne dass sich die Rotationsachse selbst verändert, indem der Objektträger mit dem hierauf angeordneten Objekt verlagert wird. Die Rotationsachse wird hierbei jedoch hinsichtlich ihrer relativen Lage zum Objektträger repositioniert. Während der Nutzung des Gerätestativs können so verschiedene Abschnitte des Objektes in den Wirkbereich des genutzten Gerätes gebracht werden.

Eine vorteilhafte Ausführungsform der Erfindung sieht vor, dass die Rotationsachse durch einen die Magnetkopplung vermittelndes Magnetbauteil verläuft, welches wahlweise in den Objektträgertisch zumindest teilweise eingelassen ist. Mit Hilfe des Magnetbauteils, welches seinerseits drehbar gelagert sein kann, wird der Objektträger in seiner relativen Position zu der Rotationsachse in der gewünschten Stellung gehalten. Gleichzeitig ist ein Drehen des Objektträgers um die Rotationsachse ermöglicht. Der Objektträger kann in eine andere Position einfach verlagert werden, indem die Magnetkraft zwischen dem Magnetteil und dem Objektträger überwunden wird.

Bevorzugt sieht eine Fortbildung der Erfindung vor, dass der Geräteanschluss stufenlos entlang des Kreisbogenabschnitts verlagerbar ist. Es können beliebige Stellungen entlang des Kreisbogenabschnitts eingenommen werden. Die einnehmbaren Stellungen erstrecken sich beispielsweise über einen Kreisbogenabschnitt, dessen aufgespannter Winkel wenigstens etwa 120° beträgt.

Bei einer vorteilhaften Ausgestaltung der Erfindung kann vorgesehen sein, dass das Koppelteil bei der geführten Verlagerung in verschiedenen Verlagerungsstellungen feststellfrei fixiert ist. Es ist also nicht notwendig, das Koppelteil in einer eingenommenen Stellung zusätzlich durch Feststellen mit Hilfe von Feststellmitteln zu sichern. Auf diese Weise kann das genutzte Gerät von dem Benutzer schnell und bequem in beliebige Positionen entlang des Kreisbogenabschnitts gebracht werden. In einer bevorzugten Ausgestaltung wird das Koppelteil in den jeweiligen Verlagerungsstellungen aufgrund von Reibungskräften zwischen dem Koppelteil und Führungselementen gehalten. Das Koppelteil ist gegen die Verlagerung aus einer Ausgangsstellung mit Hilfe der Reibungskräfte vorgespannt, die der Benutzer zum Verlagern aus der Ausgangsstellung in eine geänderte Stellung überwinden muss. Zweckmäßig sind einstellbare Führungselemente vorgesehen, die konfiguriert sind, eine verstellbare Reibungskraft zur Verfügung zu stellen. Zum Beispiel werden als Führungselemente drehbar gelagerte Roller mit einer Nut genutzt, in welcher das Koppelteil beim Verlagern auf den Rollern abrollt. In einer alternativen Ausgestaltung oder in Kombination mit den Rollern können feststehende Führungselemente vorgesehen sein, auf denen das Koppelteil beim Verlagern rutscht.

Eine Weiterbildung der Erfindung kann vorsehen, dass das Gerät eine Bildaufnahmeeinrichtung ist. Die Bildaufnahmeeinrichtung ermöglicht eine mikroskopische Untersuchung des zu betrachtenden Objektes. Als Bildaufnahmeeinrichtung kann beispielsweise eine Kamera verwendet werden, insbesondere eine Videokamera. Bei der Nutzung des Gerätestativs in Verbindung mit der Bildaufnahmeeinrichtung kann weiterhin ein Bildmonitor vorgesehen sein, auf dem die aufgenommenen Bilder dem Benutzer des Gerätestativs dargestellt werden. Zweckmäßig wird ein Flachbildschirm verwendet, der bedarfsweise an dem Träger montiert ist.

Bei einer zweckmäßigen Ausgestaltung der Erfindung kann vorgesehen sein, dass die Bildaufnahmeeinrichtung eine Autofokuseinrichtung aufweist. Die Autofokuseinrichtung sorgt für stets optimierte optische Abbildungsverhältnisse, wenn sich der Abstand zwischen Bildaufnahmeeinrichtung und einem dieser gegenüberliegenden Beobachtungsabschnitt des Objektes ändert, was beispielsweise der Fall ist, wenn mittels Verlagern des Objektträgers ein anderer Abschnitt des zu beobachtenden Objektes in den Beobachtungsbereich der Bildaufnahmeeinrichtung verlagert wird, welcher näher oder ferner zu der Bildaufnahmeeinrichtung angeordnet ist.

Eine bevorzugte Weiterbildung der Erfindung sieht vor, dass der Bildaufnahmeeinrichtung eine eine Fokuslänge der Bildaufnahmeeinrichtung anpassende und wahlweise verstellbare Vorsatzoptik vorgelagert ist. Bei der Vorsatzoptik handelt es sich beispielsweise um eine entlang der optischen Achse der Bildaufnahmeeinrichtung verlagerbare Linse

Eine vorteilhafte Ausführungsform der Erfindung sieht vor, dass das Gerät ein Materialbearbeitungswerkzeug ist. Zur Materialbearbeitung kann beispielsweise ein Laser verwendet werden, dessen Laserlichtstrahl entlang der Wirkachse zu dem Objekt auf dem Objektträger gelangt.

Bevorzugt sieht eine Fortbildung der Erfindung ein horizontales Wälzlager vor.

Bei einer vorteilhaften Ausgestaltung der Erfindung kann vorgesehen sein, dass der Geräteanschluss als ein Anschluss ausgewählt aus der folgenden Gruppe von Anschlüssen ausgeführt ist: Festanschluss, formschlüssiger Festanschluss, Wechselkupplung und formschlüssig kuppelnde Wechselkupplung.

Eine Weiterbildung der Erfindung kann vorsehen, dass der Geräteanschluss bei der geführten Verlagerung des angelengten Koppelteils auf einem Kreisbogenabschnitt mit einem aufspannten Winkel von bis zu etwa 120° bewegbar ist.

Bei einer zweckmäßigen Ausgestaltung der Erfindung kann vorgesehen sein, dass das Gerät in einer einen Arbeitsbereich unterhalb des Gerätes freihaltenden Montagestellung an den Geräteanschluss montierbar ist. Das Gerät ist oberhalb des Objektträgers in einem Abstand angeordnet, der einen freien Zugriff auf das Objekt auf dem Objektträger auch mit einem Arbeitsgerät ermöglicht, beispielsweise einem Lötkolben. Hierzu muss der Abstand zwischen Objektträger und dem Gerät üblicherweise wenigstens etwa 10 cm, bevorzugt wenigstens etwa 15 cm und weiter bevorzugt wenigstens etwa 20 cm betragen, um eine ausreichende Arbeitsfreiheit zur Verfügung zu stellen. Im Unterschied dazu ist ein solcher Arbeitsbereich bei mikroskopischen Beobachtungssystemen üblicherweise nicht gegeben.

In einer Ausgestaltung des Gerätestativs kann vorgesehen sein, dass Beleuchtungsmittel, beispielsweise in Form von einer oder mehrerer Lampen gebildet sind, mit denen das zu beobachtende oder zu bearbeitende Objekt beleuchtet wird. Die Beleuchtungsmittel können beispielsweise an dem Gerät selbst montiert sein. In einer Ausgestaltung handelt es sich bei den Beleuchtungsmitteln um ein oder mehrere Lampen, die jeweils an einem flexibel einstellbaren Trägerarm montiert sind. Auch kann eine Lichtzeigereinrichtung vorgesehen sein, mit der ein Punkt, beispielsweise ein Untersuchungsbereich, auf dem Objekt optisch markiert, was eine Orientierung an dem Objekt erleichtert, sei es bei der Inspektion oder der Bearbeitung.

### Beschreibung bevorzugter Ausführungsbeispiele der Erfindung

Die Erfindung wird im folgenden anhand von Ausführungsbeispielen unter Bezugnahme auf Figuren einer Zeichnung näher erläutert: Hierbei zeigen:
- Fig. 1: ein Gerätestativ mit Objektträgertisch und einer hieran angeordneten Kamera mit Autofokus, bei eine Wirkachse einen Winkel von 90° zum Objektträgertisch einnimmt,
- Fig. 2: das Gerätestativ aus Fig. 1 mit einer Kameraneigung von 45° zum Objektträgertisch, und
- Fig.: 3 ein weiteres Gerätestativ mit Objektträgertisch und einer hieran angeordneten Kamera mit Autofokus.

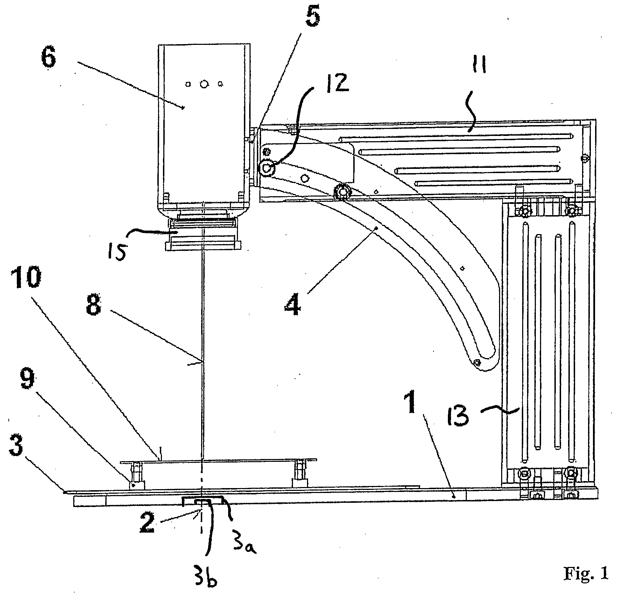

Gemäß Fig. 1 ist auf einem Objektträgertisch 1 ein Objektträger 3, eine paramagnetische E-delstahlplatte, auf einem Horizontalwälzlager 3a um die Rotationsachse 2 drehbar gelagert. In dem Horizontalwälzlager 3a ist ein Magnet 3b drehbar gelagert. Ein Rotationsantrieb erfolgt bevorzugt manuell.

Ein Werkstück 10, beispielsweise eine Leiterplatine, ist auf magnetischen Werkstückträgern 9 positioniert und gehalten, die ihrerseits auf dem Objektträger 3 angeordnet sind.

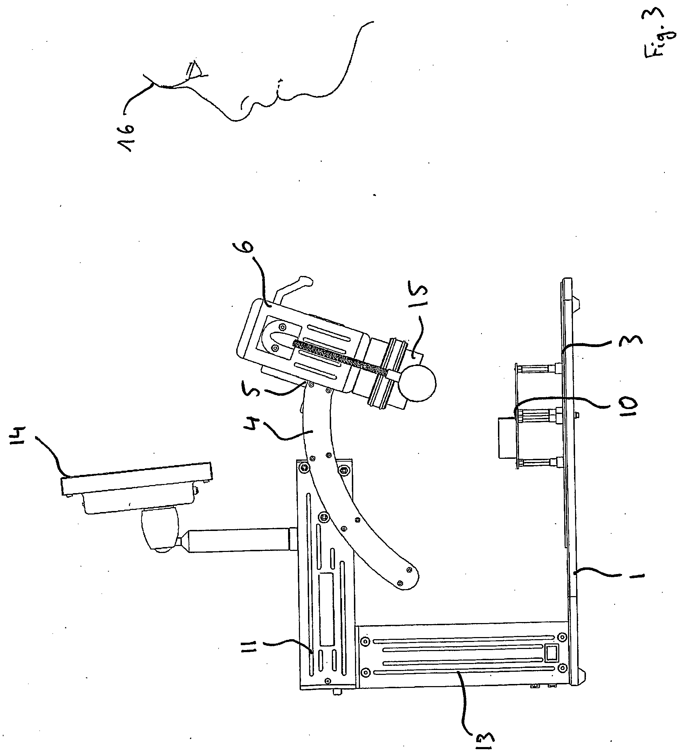

Ein Drehen des Objektträgers 3 liefert über eine Videokamera 6, welches zweckmäßigerweise mit einer Autofokuseinrichtung ausgestattet ist, auf einem Monitor (vgl. Fig. 3) Bilder einer Oberfläche des Werkstücks 10 in allen benötigten Ausrichtungen. In Fig. 1 ist die Rotationsachse 2 axial zu einer Wirkachse 8 der Videokamera 6 angeordnet, bei der es sich im Fall der Videokamera 6 um deren optische Achse handelt.

Mit Hilfe der in Fig. 1 dargestellten Anordnung ist es einem Benutzer ermöglicht, sich beim Betrachten des Monitors (vgl. Fig. 3), zum Beispiel ein TFT-Bildschirm, und des Werkstücks 10 so zu positionieren, dass von den Augen zu dem Monitor und zu dem Werkstück 10 ein im wesentlichen gleicher Abstand gebildet ist, so dass eine Beobachtung der Darstellungen auf dem Monitor einerseits und des Werkstücks 10 andererseits ohne wesentliche Augenadaption ermöglicht ist.

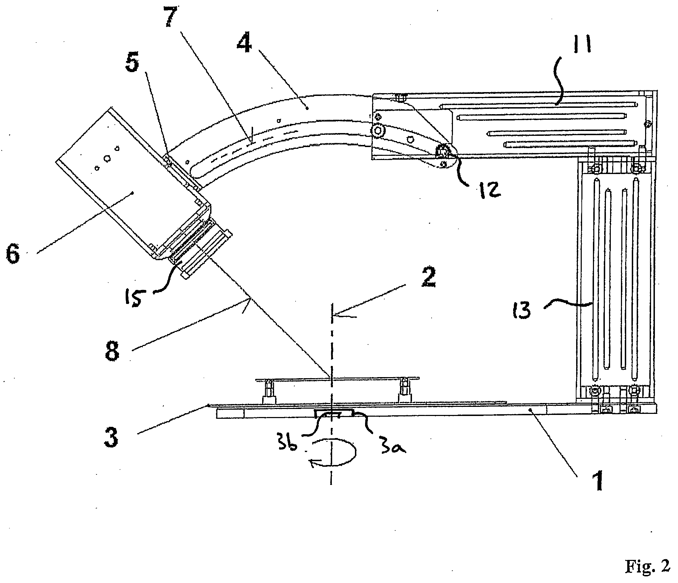

Ein Verschwenken der Videokamera 6 in der in Fig. 2 gezeigten Weise liefert dann auch seitliche schräge Ansichten des Werkstücks 10. Hierbei erfolgt das Verschwenken der Videokamera 6 mittels geführter Verlagerung eines Koppelteils 4 entlang eines Kreisbogenabschnitts 7, so dass das Werkstück 10 verzerrungsfrei vermessbar ist.

Das Verschwenken der Videokamera 6 ermöglicht eine seitliche Beobachtung des Werkstücks 10. Handelt es sich hierbei um einer Leiterplatte mit einer Bauteilbestückung können so die Bauteile auch schräg von der Seite eingesehen werden.

Das Koppelteil 4 ist an einem Trägerkopf 11 schwenkbar angelengt und wird beim Verschwenken mit Hilfe von als Rollen mit Nut ausgebildeten Führungsmitteln 12 geführt. Der Trägerkopf 11 ist starr an einem Trägerfuß 13 montiert, welcher in der dargestellten Ausführungsform seinerseits mit dem Objektträgertisch 1 in Verbindung steht.

Die Videokamera 6 verfügt über eine Vorsatzoptik 15, mit der eine Fokuslänge einstellbar ist. Zu diesem Zweck ist die Vorsatzoptik 15, bei der es sich beispielsweise um eine Linse oder eine Linsenkombination handelt, entlang der Wirkachse 8 verlagerbar.

Fig. 3 zeigt ein weiteres Gerätestativ mit einem Objektträgertisch 1 und einer Videokamera 6. Für die gleichen Elemente werden die gleichen Bezugszeichen wie in Fig. 1 und 2 verwendet. Es ist ein Monitor 14 vorgesehen, welcher die von der Videokamera 6 aufgenommenen Bilder einer Oberfläche des Werkstücks 10 darstellt. Weiterhin zeigt Fig. 3 schematisch einen Benutzer 16, welchem es mittels der in Fig. 3 dargestellten Anordnung ermöglicht ist, sich in der oben beschriebenen Weise zu positionieren.

Die in der vorstehenden Beschreibung, den Ansprüchen und den Figuren offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Gerätestativ zur technischen Inspektion oder Fertigung, mit:
- einem Objektträgertisch (1),
- einem starren Träger, bei dem ein Trägerkopf (11) über dem Objektträgertisch (1) und bei dem ein Trägerfuß (13) angeordnet sind,
- einem an dem Trägerkopf (11) angelenkten Koppelteil (4),
- einem an einem distalen Ende des Koppclteils (4) gebildeten Geräteanschluss (5), welcher konfiguriert ist, ein zur Inspektion oder Fertigung nutzbares Gerät (6) aufzunchmen, und
- einem auf dem Objektträgertisch (1) angeordneten Objektträger (3), welcher um eine Rotationsachse (2) drehbar gelagert ist,
wobei die Rotationsachse (2) bei aufrecht stehender Ausrichtung einer Wirkachse (8) des Gerätes (6) auf dem Objektträger (3) koaxial zur Wirkachse (8) ausgerichtet ist,
wobei
- das Koppelteil (4) an dem Trägerkopf einen sich bei nicht aufrecht stehender Ausrichtung der Wirkachse (8) ergebenden Schnittpunkt zwischen der Wirkachse (8) und der Rotationsachse (2) bei der geführten Verlagerung im wesentlichen aufrechterhaltend geführt ist,
**dadurch gekennzeichnet, dass**
- der Geräteanschluss (5) sich bei einer geführten Verlagerung des Koppelteils (4) auf einem Kreisbogenabschnitt (7) bewegt,
wobei an dem Gerätestativ eine Magnetkopplung vorgesehen ist, mittels welcher der Objektträger (3) an dem Objektträgertisch (1) gehalten wird.

2. Gerätestativ nach Anspruch 1, **dadurch gekennzeichnet, dass** der Objektträger (3) die Rotationsachse (2) nicht ändernd verlagerbar ist.

3. Gerätestativ nach Anspruch 1 oder 2, **dadurch gekennzeichnet, dass** die Rotationsachse (2) durch einen die Magnetkopplung vermittelndes Magnetbauteil verläuft.

4. Gerätestativ nach einem der vorangehenden Ansprüche, **dadurch gekennzeichnet, dass** der Geräteanschluss (5) stufenlos entlang des Kreisbogenabschnitts (7) verlagerbar ist.

5. Gerätestativ nach einem der vorangehenden Ansprüche, **dadurch gekennzeichnet, dass** das Koppelteil (4) bei der geführten Verlagerung in verschiedenen Verlagerungsstellungen feststellfrei fixiert ist.

6. Gerätestativ nach einem der vorangehenden Ansprüche, **dadurch gekennzeichnet, dass** das Gerät (6) eine Bildaufnahmeeinrichtung ist.

7. Gerätestativ nach Anspruch 6, **dadurch gekennzeichnet, dass** die Bildaufnahmeeinrichtung eine Autofokuseinrichtung aufweist.

8. Gerätestativ nach Anspruch 6 oder 7, **dadurch gekennzeichnet, dass** der Bildaufnahmeeinrichtung eine Fokuslänge der Bildaufnahmeeinrichtung anpassende und wahlweise verstellbare Vorsatzoptik (15) vorgelagert ist.

9. Gerätestativ nach einem der Ansprüche 1 bis 5, **dadurch gekennzeichnet, dass** das Gerät (6) ein Materialbearbeitungswerkzeug ist.

10. Gerätestativ nach einem der vorangehenden Ansprüche, **gekennzeichnet durch** ein horizontales Wälzlager.

11. Gerätestativ nach einem der vorangehenden Ansprüche, **dadurch gekennzeichnet, dass** der Geräteanschluss (5) als ein Anschluss ausgewählt aus der folgenden Gruppe von Anschlüssen ausgeführt ist: Festanschluss, formschlüssiger Festanschluss, Wechselkupplung und formschlüssig kuppelnde Wechselkupplung.

12. Gerätestativ nach einem der vorangehenden Ansprüche, **dadurch gekennzeichnet, dass** der Geräteanschluss (5) bei der geführten Verlagerung des angelengten Koppelteils (4) auf einem Kreisbogenabschnitt (7) mit einem aufspannten Winkel von bis zu etwa 120° bewegbar ist.

13. Gerätestativ nach einem der vorangehenden Ansprüche, **dadurch gekennzeichnet, dass** das Gerät (6) in einer einen Arbeitsbereich unterhalb des Gerätes (6) freihaltenden Montagestellung an den Geräteanschluss (5) montierbar ist.

14. Gcrätestativ nach Anspruch 1, wobei der Trägerfuß (13) am Rande des Objektträgertisches (1) angeordnet ist.

15. Gerätestativ nach Anspruch 3, wobei das Magnetbauteil in den Objektträgertisch (1) zumindest teilweise eingelassen ist.

## Claims

1. A stand for technical inspection or production, comprising
- an object carrier table (1),
- a rigid support, in which a head support (11) is arranged above the object carrier table (1), and alongside which a foot support (13) is arranged,
- a coupling member (4) hinged on the head support (11),
- an equipment connector (5) formed on a distal end of the coupling member (4), which equipment connector (5) is configured so as to accommodate an item of equipment (6) that can be used for purposes of inspection or production, and
- an object carrier (3) arranged on the object carrier table (1), which object carrier is mounted such that it can be rotated about an axis of rotation (2),
wherein with a vertical alignment of a working axis (8) of the item of equipment (6), the axis of rotation (2) is aligned coaxially with the working axis (8) on the object carrier (3), wherein the coupling member (4) is guided on the head support, essentially maintaining a point of intersection between the working axis (8) and the axis of rotation (2), which point of intersection ensues in the event of a non-vertical alignment of the working axis (8) in the course of the guided displacement,
**characterised in that**,
- in the course of a guided displacement of the coupling member (4), the equipment connector (5) moves along a circular arc section (7),
wherein a magnetic coupling is provided on the equipment stand, by means of which the object carrier (3) is held on the object carrier table (1).

2. The stand in accordance with claim 1, **characterised in that** the object carrier (3) can be mounted such that it does not alter the axis of rotation (2).

3. The stand in accordance with claim 1 or 2, **characterised in that** the axis of rotation (2) runs through a magnetic component facilitating the magnetic coupling.

4. The stand in accordance with one of the preceding claims, **characterised in that** the equipment connector (5) can be displaced continuously along the circular arc section (7).

5. The stand in accordance with one of the preceding claims, **characterised in that** during the guided displacement the coupling member (4) is fixed in various displacement positions, free of any fixing aids.

6. The stand in accordance with one of the preceding claims, **characterised in that** the item of equipment (6) is an image acquisition device.

7. The stand in accordance with claim 6, **characterised in that** the image acquisition device has an auto-focusing device.

8. The stand in accordance with claim 6 or 7, **characterised in that** a focus length matched to the image acquisition device and optionally adjustable ancillary optics (15) are mounted upstream of the image acquisition device.

9. The stand in accordance with one of the claims 1 to 5, **characterised in that** the item of equipment (6) is a material-processing tool.

10. The stand in accordance with one of the preceding claims, **characterised by** a horizontal rolling bearing.

11. The stand in accordance with one of the preceding claims, **characterised in that** the equipment connector (5) is embodied as a connector selected from the following group of connectors: permanent connector, form-fit permanent connector, changeover coupling and form-fit engaging changeover coupling.

12. The stand in accordance with one of the preceding claims, **characterised in that** the equipment connector (5) in the course of the guided displacement of the hinged coupling member (4) along a circular arc section (7) can be moved with a clamped angle of up to approximately 120°.

13. The stand in accordance with one of the preceding claims, **characterised in that** the item of equipment (6) can be installed in an installation position on the equipment connector (5) maintaining a free working region underneath the item of equipment(6).

14. The stand in accordance with claim 1, wherein the support foot (13) is arranged at the edge of the object carrier table (1).

15. The stand in accordance with claim 3, wherein the magnetic component is at least partially let into the object carrier table (1).

## Revendications

1. Support d'appareil utilisé à des fins d'inspection ou d'assemblage, avec
- une table porte-objet (1),
- un support rigide pour lequel une tête de support (11) est placée au-dessus de la table porte-objet (1) et pour un pied de support (13) est placé,
- une pièce d'accouplement (4) articulée sur la tête de support (11),
- un raccord d'appareil (5) formé sur une extrémité distale de la pièce d'accouplement (4), lequel est configuré pour recevoir un appareil (6) utilisable à des fins d'inspection ou d'assemblage et
- un porte-objet (3) placé sur le plateau porte-objet (1) qui est logé en étant rotatif autour d'un axe de rotation (2),
lorsqu'un axe utile (8) de l'appareil (6) est orienté à la verticale sur le porte-objet (3), l'axe de rotation (2) étant en orientation coaxiale par rapport à l'axe utile (8),
- lors du déplacement guidé, la pièce d'accouplement (4) sur la tête de support étant guidée de manière à maintenir sensiblement un point d'intersection résultant entre l'axe utile (8) et l'axe de rotation (2) lorsque l'axe utile (8) n'est pas orienté à la verticale,
**caractérisé en ce que**
- lors d'un déplacement guidé de la pièce d'accouplement (4), le raccord d'appareil (5) se déplace sur une section en arc de cercle (7),
- sur le support d'appareil étant prévu un accouplement magnétique, au moyen duquel le porte-objet (3) est maintenu sur la table porte-objet (1).

2. Support d'appareil selon la revendication 1 **caractérisé en ce que** le porte-objet (3) est déplaçable sans modifier l'axe de rotation (2).

3. Support d'appareil selon la revendication 1 ou la revendication 2, **caractérisé en ce que** l'axe de rotation (2) s'étend à travers un composant magnétique transmettant l'accouplement magnétique.

4. Support d'appareil selon l'une quelconque des revendications précédentes, **caractérisé en ce que** le raccord d'appareil (5) est déplaçable de manière continue le long de la section en arc de cercle (7).

5. Support d'appareil selon l'une quelconque des revendications précédentes, **caractérisé en ce que**, lors du déplacement guidé dans différentes positions de déplacement, la pièce d'accouplement (4) est fixée sans immobilisation.

6. Support d'appareil selon l'une quelconque des revendications précédentes, **caractérisé en ce que** l'appareil (6) est un dispositif d'enregistrement d'images.

7. Support d'appareil selon la revendication 6, **caractérisé en ce que** le dispositif d'enregistrement d'images est un système autofocus.

8. Support d'appareil selon la revendication 6 ou la revendication 7, **caractérisé en ce qu'**en amont du dispositif d'enregistrement d'images est placée une optique additionnelle (15) adaptant une longueur focale du dispositif d'enregistrement d'images et réglable à volonté.

9. Support d'appareil selon l'une quelconque des revendications 1 à 5, **caractérisé en ce que** l'appareil (6) est un outil d'usinage de matière.

10. Support d'appareil selon l'une quelconque des revendications précédentes, **caractérisé par** un roulement horizontal.

11. Support d'appareil selon l'une quelconque des revendications précédentes, **caractérisé en ce que** le raccord d'appareil (5) est réalisé en tant qu'un raccord choisi dans le groupe de raccords suivants : raccord fixe, raccord fixe par complémentarité de forme, accouplement interchangeable et accouplement interchangeable à couplage par complémentarité de forme.

12. Support d'appareil selon l'une quelconque des revendications précédentes, **caractérisé en ce que** lors du déplacement guidé de la pièce d'accouplement (4) articulée, le raccord d'appareil (5) est déplaçable sur une section en arc de cercle (7) en formant un angle de jusqu'à environ 120°.

13. Support d'appareil selon l'une quelconque des revendications précédentes, **caractérisé en ce que** l'appareil (6) est susceptible d'être monté sur le raccord d'appareil (5) dans une position de montage laissant libre en dessous de l'appareil (6) une zone de travail.

14. Support d'appareil selon la revendication 1, le pied de support (13) étant placé sur le bord de la table porte-objet (1).

15. Support d'appareil selon la revendication 3, le composant magnétique étant enchâssé au moins en partie dans la table porte-objet (1).
